# EUROPEAN PATENT APPLICATION

(11) **EP 4 513 403 A1**
(43) Date of publication of application: **26.02.2025**
(21) Application number: 24184276.4
(22) Date of filing: 25.06.2024
(51) Int. Cl.: G06Q 10/08, G06Q 10/083, G06Q 10/0835

(54) **COMPUTATION PROGRAM, COMPUTATION METHOD, AND INFORMATION PROCESSING APPARATUS**

(30) Priority: 21.08.2023 JP 2023134015
(71) Applicant: FUJITSU LIMITED, Kawasaki-shi, Kanagawa 211-8588 (JP)
(72) Inventor: KAMEYAMA, Hiroaki, Kawasaki-shi, Kanagawa, 211-8588 (JP)
(74) Representative: Hoffmann Eitle

(57) **Abstract**

A computation program including instructions which, when executed by a computer, cause the computer to execute processing comprising: acquiring a combination of a first regular delivery and a second regular delivery from regular deliveries each of which has a route from a first node to a last node and for which it is determined at which node each package is loaded and transported to which node; and creating a transport vehicle relay delivery by specifying a node where a package is loaded last in the first regular delivery, adding a route of the second regular delivery after the specified node, deleting a first node of the second regular delivery when matching with the specified node, and adding a first node of the first regular delivery as a last node when a last node of the second regular delivery does not match the first node of the first regular delivery.

## Description

### FIELD

The embodiment discussed herein is related to a computation program, a computation method, and an information processing apparatus.

### BACKGROUND

Transport of packages using transport vehicles is performed in the distribution industry. Because there are a wide variety of types of packages and there are a large number of sites, optimization of a transport plan is performed.

Japanese Laid-open Patent Publication Nos. 2020-56683 and 2019-117444, and U.S. Patent Publication Nos. 2021/0046929 and 2020/0027060 are disclosed as related art.

### SUMMARY

### TECHNICAL PROBLEM

When packages are loaded and unloaded at sites in the middle of such a transport plan, there is a risk that it takes a long transport time to complete the transport of the packages. By contrast, a transport vehicle relay delivery in which one driver changes a plurality of transport vehicles has been studied. However, a technique for efficiently generating the transport vehicle relay delivery is not disclosed.

In one aspect, an object of the present disclosure is to provide a computer-readable recording medium storing a computation program, a computation method, and an information processing apparatus capable of efficiently generating a transport vehicle relay delivery.

### SOLUTION TO PROBLEM

According to an aspect of the embodiments, there is provided a computation program including instructions which, when executed by a computer, cause the computer to execute processing including: acquiring a combination of a first regular delivery and a second regular delivery from a set that includes a plurality of regular deliveries each of which has a route from a first node to a last node and for which it is determined at which node each package is loaded and transported to which node; and creating a transport vehicle relay delivery by specifying a node at which a package is loaded last in the first regular delivery, adding a route of the second regular delivery after the specified node, deleting a first node of the second regular delivery when the specified node and the first node of the second regular delivery match, and adding a first node of the first regular delivery as a last node when a last node of the second regular delivery does not match the first node of the first regular delivery.

### ADVANTAGEOUS EFFECTS OF INVENTION

A transport vehicle relay delivery may be efficiently generated.

### BRIEF DESCRIPTION OF DRAWINGS

FIG. 1A is a diagram illustrating a transport plan, and FIG. 1B is an example in which the transport plan in FIG. 1A is optimized;
FIG. 2 is a diagram illustrating a transport vehicle relay delivery;
FIG. 3 is a diagram illustrating a time schedule;
FIG. 4A is a functional block diagram illustrating an overall configuration of an information processing apparatus according to a first embodiment, and FIG. 4B is a hardware configuration diagram of the information processing apparatus;
FIG. 5 is a regular delivery table that stores each regular delivery stored in a regular delivery storage unit;
FIG. 6 is a diagram illustrating a flowchart;
FIG. 7 is a flowchart presenting details of transport vehicle relay delivery creation processing in step S2;
FIGs. 8A and 8B are diagrams illustrating a case where a transport vehicle relay delivery is generated;
FIG. 9 is a diagram illustrating a case where the transport vehicle relay delivery is generated; and
FIG. 10 is a diagram illustrating a case where the transport vehicle relay delivery is generated.

### DESCRIPTION OF EMBODIMENTS

Transport of packages using transport vehicles is performed in the distribution industry. For example, packages are transported from a site (node) to a site. Because there are a wide variety of types of packages and a large number of sites, optimization of a transport plan is desired.

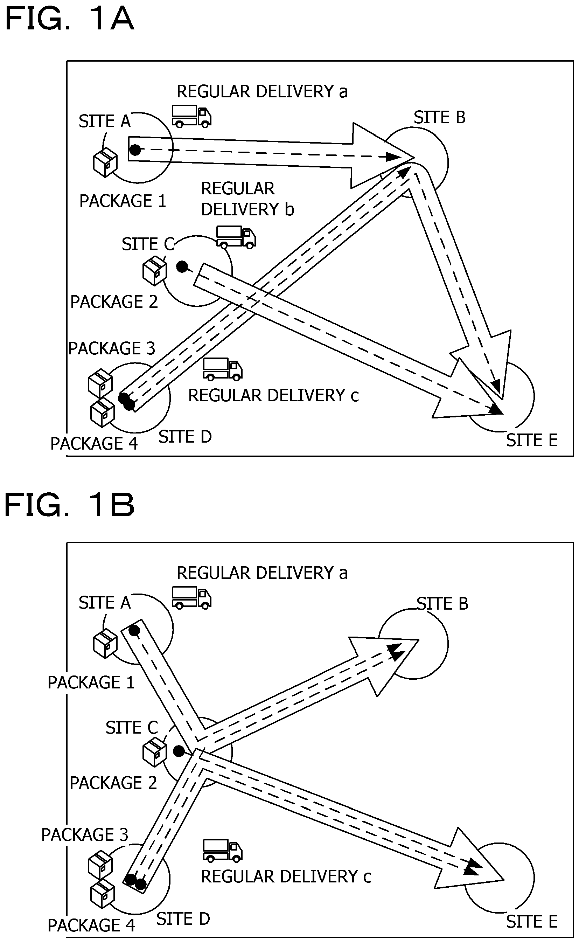

FIG. 1A is a diagram illustrating a transport plan. As illustrated in FIG. 1A, a regular delivery a is a delivery in which a package 1 is loaded at a site A and the package 1 is unloaded at a site B. A regular delivery b is a delivery in which a package 2 is loaded at a site C and the package 2 is unloaded at a site E. A regular delivery c is a delivery in which a package 3 and a package 4 are loaded at a site D, the package 3 is unloaded at the site B, and then the package 4 is unloaded at the site E.

FIG. 1B illustrates an example in which the transport plan in FIG. 1A is optimized. In the optimization, a stop-by site of the regular delivery is changed, and a package transfer site is changed, thereby reducing a number of deliveries, reducing an operation distance, shortening a transport time (lead time) of packages, and the like. For example, in the optimization result of FIG. 1B, in the regular delivery c, the package 3 and the package 4 are loaded at the site D, the package 3 is unloaded and the package 2 is loaded at the site C, and the package 2 and the package 4 are unloaded at the site E. In the regular delivery a, the package 1 is loaded at the site A, the package 3 is loaded at the site C, and the package 1 and the package 3 are unloaded at the site B. By doing so, it is possible to omit the regular delivery b.

According to such a transport plan, it is common that one driver operates one transport vehicle. However, when loading and unloading of a package occurs at a site in the middle of the transport, there is a risk that the transport time taken to complete the transport of the package may increase. By contrast, when one driver changes a plurality of transport vehicles, it is possible to shorten the time taken to load and unload packages. Hereinafter, this will be referred to as a transport vehicle relay delivery in which one driver changes a plurality of transport vehicles.

The transport vehicle relay delivery has the following advantages. For example, at a site at which a driver changes from a first transport vehicle to a second transport vehicle, a time taken to unload packages from the first transport vehicle is reduced. Before the first transport vehicle arrives at this site, the second transport vehicle may be loaded with packages. Accordingly, since the time for loading and unloading the packages may be reduced, the transport time may be shortened. As a result, it is possible to shorten a constraint time of the driver, and the number of drivers may be reduced. By separating the transportation work and the cargo handling work from each other, the work environment of the driver may be improved. Since the second transport vehicle may be loaded with packages in advance, a space for stocking the packages during a waiting time until the first transport vehicle arrives may be reduced.

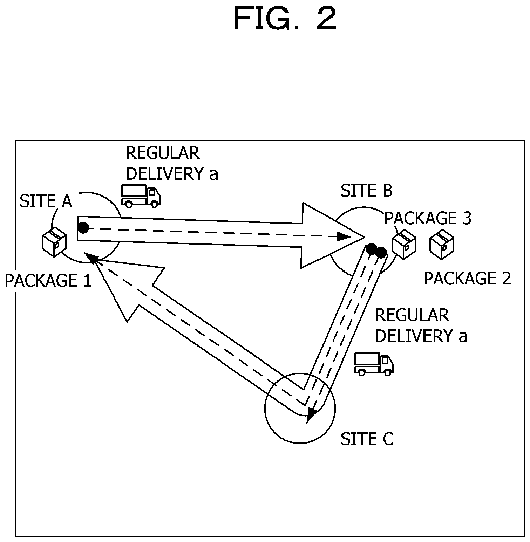

FIG. 2 is a diagram illustrating a transport vehicle relay delivery. For example, one driver loads the package 1 into the first transport vehicle at the site A and transports the package 1 to the site B in the regular delivery a. Next, this driver changes to the second transport vehicle loaded with the package 2 and the package 3 at the site B, unloads the package 2 at the site C, and unloads the package 3 at the site C. Unloading of the package is not performed by the driver but is performed by a loading and unloading staff at each site.

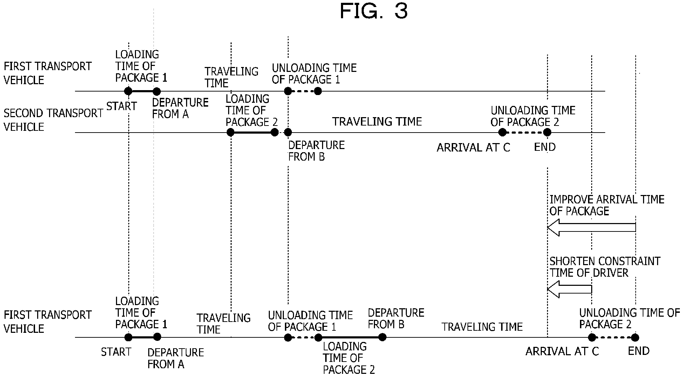

An upper part of FIG. 3 is a diagram illustrating a time schedule of the transport vehicle relay delivery in FIG. 2. The upper part of FIG. 3 illustrates a time schedule until the package 2 is unloaded at the site C as an example. As illustrated in the upper part of FIG. 3, first, it takes time to load the package 1 into the first transport vehicle at the site A. Although a work of loading the package 1 is performed by the loading and unloading staff, the work may be performed by the driver. Next, a traveling time for traveling by the first transport vehicle from the site A to the site B is taken. Although a work of unloading the package 1 occurs at the site B, the driver does not perform this work. The package 2 is already loaded in the second transport vehicle. Next, the driver changes from the first transport vehicle to the second transport vehicle, departs from the site B, and transports the package 2 to the site C. At the site C, a work of unloading the package 2 occurs. Although the work of unloading the packages 2 is performed by the loading and unloading staff, the work may be performed by the driver.

A lower part in FIG. 3 is a time schedule in a case where the package 1 and the package 2 are transported by one transport vehicle instead of the transport vehicle relay delivery. Also in the lower part of FIG. 3, a time schedule until the package 2 is unloaded at the site C is illustrated. As illustrated in the lower part of FIG. 3, first, it takes time to load the package 1 into the first transport vehicle at the site A. Although a work of loading the package 1 is performed by the loading and unloading staff, the work may be performed by the driver. Next, a traveling time for traveling by the first transport vehicle from the site A to the site B is taken. At the site B, a work of unloading the package 1 occurs. The work of unloading the package 1 may be performed by the loading and unloading staff or the driver. Next, the loading and unloading staff or the driver loads the package 2 into the first transport vehicle at the site B. Next, the driver transports the package 2 to the site C. At the site C, a work of unloading the package 2 occurs. The work of unloading the package 2 may be performed by the loading and unloading staff or the driver.

In the schedule in the upper part of FIG. 3, a work time is shortened by the work of unloading the package 1 and the work of loading the package 2 at the site B as compared with the schedule in the lower part of FIG. 3. Accordingly, the transport time may be shortened. Since the work of unloading the package 1 and the work of loading the package 2 at the site B are performed by the loading and unloading staff, the load on the driver is reduced. As described above, by using the transport vehicle relay delivery, it is possible to shorten the transport time and reduce the load on the driver.

A constraint condition of the transport vehicle relay delivery will be described. First, the driver changes the transport vehicle at a designated site. Next, for the transport vehicle after change, packages may be loaded before the transport vehicle before change arrives. For the transport vehicle after change, the departure may be made at a later time among a time when the transport vehicle before change arrives and a time when loading of packages to the transport vehicle after change is completed. The transport vehicle after change does not continue to transport the packages of the transport vehicle before change. There are types of packages that **may not** be transported by the transport vehicle relay delivery. A departure site and a final site are matched (the driver returns to the departure site). Efficient generation of the above-described transport vehicle relay delivery is desired.

An information processing apparatus, a computation method, and a computation program that may efficiently generate a transport vehicle relay delivery will be described in the following embodiment.

### [First Embodiment]

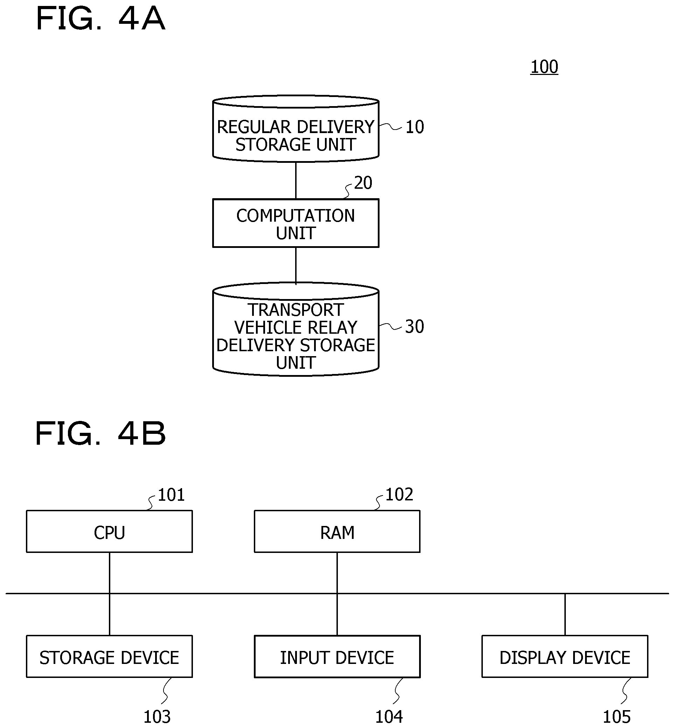

FIG. 4A is a functional block diagram illustrating an overall configuration of an information processing apparatus 100 according to a first embodiment. The information processing apparatus 100 is a server or the like for optimization processing. As illustrated in FIG. 4A, the information processing apparatus 100 functions as a regular delivery storage unit 10, a computation unit 20, a transport vehicle relay delivery storage unit 30, and the like.

FIG. 4B is a hardware configuration diagram of the information processing apparatus 100. As exemplified in FIG. 4B, the information processing apparatus 100 includes a central processing unit (CPU) 101, a random-access memory (RAM) 102, a storage device 103, an input device 104, a display device 105, and the like.

The CPU 101 is a central processing unit. The CPU 101 includes one or more cores. The RAM 102 is a volatile memory that temporarily stores a program executed by the CPU 101, data processed by the CPU 101, and the like. The storage device 103 is a nonvolatile storage device. As the storage device 103, for example, a read-only memory (ROM), a solid-state drive (SSD) such as a flash memory, a hard disk to be driven by a hard disk drive, or the like may be used. The storage device 103 stores a computation program. The input device 104 is a device for a user to input desired information, and is a keyboard, a mouse, or the like. The display device 105 is a device that displays a computation result or the like of the computation unit 20 on a screen. Each unit of the information processing apparatus 100 is realized by the CPU 101 executing the computation program. Hardware such as a dedicated circuit may be used as each unit of the information processing apparatus 100.

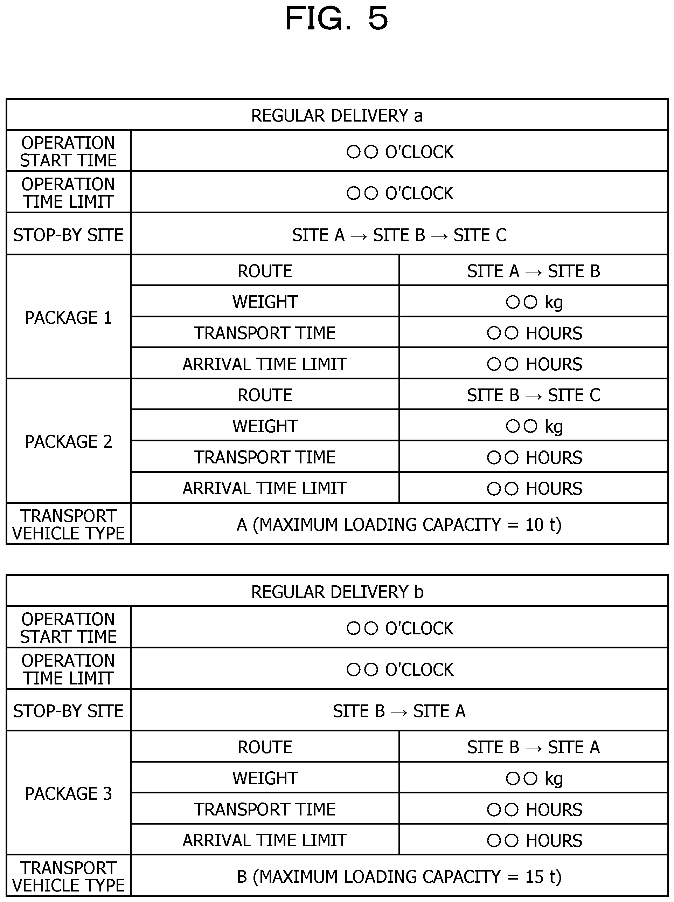

The regular delivery storage unit 10 stores a plurality of regular deliveries. FIG. 5 is a regular delivery table that stores each regular delivery stored in the regular delivery storage unit 10. Each of the regular deliveries has a route from a first site to a last site, and it is determined at which site each package is loaded and transported to which site. For example, as illustrated in FIG. 5, an operation start time and an operation time limit are defined. The operation start time is a time at which an operation may be started, and is a time at which the operation does not have to be performed at the time. The operation time limit is a time by which the operation is to be ended. A stop-by site is determined for each regular delivery. For example, in the regular delivery a, the transport vehicle departs from the site A, stops at the site B and the site C in this order, and returns to the site A. In the regular delivery b, the transport vehicle departs from the site B and arrives at the site A.

The packages to be transported are determined in each regular delivery. For each package, a route, a weight, a transport time taken to travel along all routes, an arrival time, and the like are determined. For example, it is determined that the package 1 and the package 2 are transported by the regular delivery a. The package 1 is transported from the site A to the site B. The package 2 is transported from the site B to the site C. It is determined that the package 3 is transported by the regular delivery b. The package 3 is transported from the site B to the site A.

A type of the transport vehicle to be used for transport is determined in each regular delivery. Once a transport vehicle type is specified, a maximum loading capacity and the like are determined.

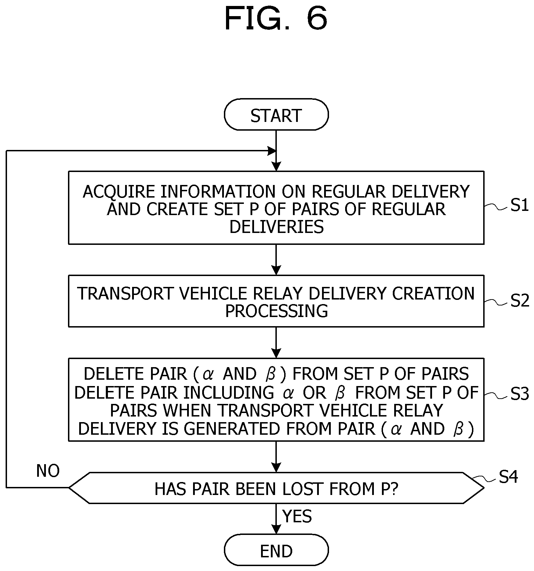

Hereinafter, computation processing will be described with reference to a flowchart in FIG. 6. First, the computation unit 20 acquires information on each regular delivery from the regular delivery storage unit 10, and creates a set P of pairs of arbitrary two regular deliveries (step S1). A pair of regular deliveries includes a first half regular delivery and a second half regular delivery. For example, in a case where the regular deliveries a, b, and c are included in the regular delivery storage unit 10, as the pairs of the first half regular delivery and the second half regular delivery, a pair of the regular deliveries a and b, a pair of the regular deliveries b and a, a pair of the regular deliveries b and c, a pair of the regular deliveries c and b, a pair of the regular deliveries a and c, and a pair of the regular deliveries c and a are acquired as the set P. As described above, the pair of the regular deliveries a and b and the pair of the regular deliveries b and a are treated as different pairs. However, a pair including a regular delivery whose operation end limit is not satisfied even when there is no package is excluded from the set P. A pair including a regular delivery prohibited from being set as a transport vehicle relay delivery is also excluded from the set P. For example, a pair including a regular delivery that involves a plurality of drivers because the time of the regular delivery exceeds a work time of one driver per day is excluded from the set P because one driver **may not** change the transport vehicles.

Next, the computation unit 20 performs transport vehicle relay delivery creation processing (step S2).

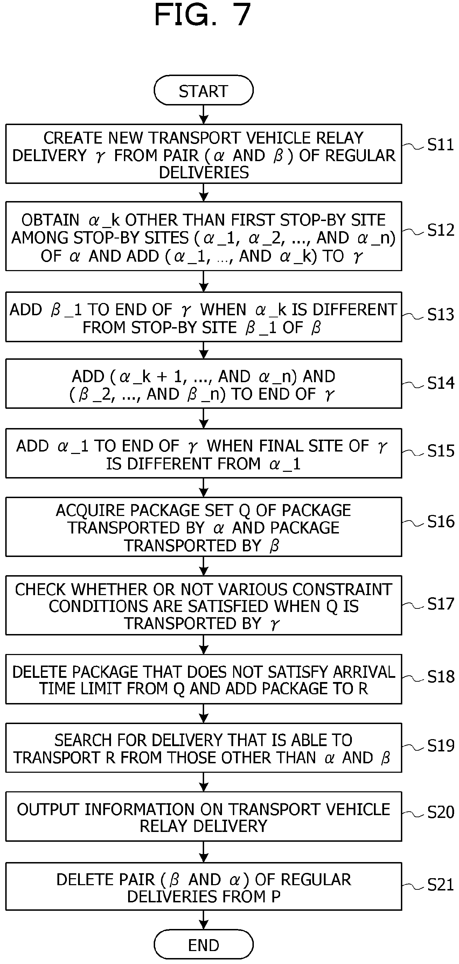

FIG. 7 is a flowchart illustrating details of the transport vehicle relay delivery creation processing in step S2. First, the computation unit 20 acquires one pair from the pairs included in the set P, and sets the first half regular delivery as a regular delivery α and the second half regular delivery as a regular delivery β. A pair of the first half regular delivery α and the second half regular delivery β is referred to as a pair (α, β). The computation unit 20 newly creates a transport vehicle relay delivery γ from the pair (α, β) (step S11). As attributes (operation start time, operation time limit, transport vehicle type, and the like) of the transport vehicle relay delivery γ, attributes of the regular delivery α are inherited. As the maximum loading capacity of the transport vehicle relay delivery, a larger one of a maximum loading capacity of the regular delivery α and a maximum loading capacity of the regular delivery β is inherited.

Next, among stop-by sites (α_1, α_2, ..., and α_n) defined in the regular delivery α, the computation unit 20 obtains a stop-by site α_k at which a package is loaded last, other than a first stop-by site. The computation unit 20 adds (α_1, ..., and α_k) from the stop-by site α_1 to the stop-by site α_k to the transport vehicle relay delivery γ (step S 12). In the (α_1, α_2, ..., and α_n), the stop-by sites in order from the site on the left to the site on the right are represented. Accordingly, the transport vehicle stops at the site α_1, then stops at the site α_2, and stops at the site α_n at last. In a case of (α_1, ..., and α_k), the site α_1 is a departure site, and α_k is a last stop-by site. In a case where there is a package that is loaded before the site α_k and unloaded after the site α_k, the following steps S13 to S21 are not executed.

Next, for stop-by sites (β_1, ..., and β_n) defined in the regular delivery β, when α_k is different from β_1, the computation unit 20 adds β_1 to the end of the transport vehicle relay delivery γ (step S13). Accordingly, after the site α_k at which the package is loaded last in the regular delivery α, the transport vehicle travels to the loading site at which the package is loaded first in the regular delivery β. When α_k is the same as β_1, step S13 is not executed.

Next, the computation unit 20 adds (α_k + 1, ..., and α_n) and (β_2, ..., and β_n) to the end of the transport vehicle relay delivery γ (step S14).

Next, in a case where the last stop-by site is different from the site α_1 in the transport vehicle relay delivery γ, the computation unit 20 adds the site α_1 to the end of the transport vehicle relay delivery γ (step S15). Accordingly, the driver departs from the site α_1 and returns to the site α_1. When the last stop-by site is the same as the site α_1 in the transport vehicle relay delivery γ, step S15 is not executed.

Next, the computation unit 20 acquires a package set Q of each package transported by the regular delivery α and each package transported by the regular delivery β (step S16). However, among the package set Q, packages that are not able to be transported by the transport vehicle relay delivery are deleted from the package set Q and set as a package set R. For example, a criterion for determining whether or not transport is possible by the transport vehicle relay delivery is determined.

Next, the computation unit 20 checks whether or not various constraint conditions (the operation time limit, the arrival time limit of the package, the loading capacity, and the like of the transport vehicle relay delivery γ) are satisfied when the package set Q is transported by the transport vehicle relay delivery γ (step S17). For example, since a traveling time between sites is determined, once an order of stop-by sites is determined, an arrival time at each site is calculated. For each package, it is possible to determine whether or not a time when a package arrives at a site of a transport destination is before the arrival time limit. Because a loading site and an unloading site are determined for each package, once a route is determined, a combination of packages loaded at the same time is determined. Accordingly, it is possible to determine whether or not there is one in which a maximum total weight exceeds a maximum loading capacity among the combinations of the packages. In a case where the transport vehicle relay delivery γ does not satisfy the operation time limit, the following steps S18 to S21 are not executed.

Next, the computation unit 20 deletes a package that does not satisfy the arrival time limit from the package set Q and adds the package to the package set R (step S18).

Next, the computation unit 20 searches for a regular delivery, from those other than the regular deliveries α and β, that is capable of transporting each package in the package set R (step S19). For example, the Dijkstra method or the like may be used as the search method. For example, among the regular deliveries remaining in the set P, a regular delivery transporting a package for which a loading site and an unloading site match is searched. After the corresponding regular delivery is searched, each package in the package set R is added to the searched regular delivery. When there is no regular delivery capable of transporting each package in the package set R, the following steps S20 and S21 are not executed.

Next, the transport vehicle relay delivery storage unit 30 outputs information on the transport vehicle relay delivery γ (step S20). The information to be output includes stop-by sites (γ_1, ..., and γ_j) of the transport vehicle relay delivery γ. The information to be output includes a site γ_i-1 at which the driver changes the transport vehicle. The information to be output includes transport information of the package set Q to be transported by the transport vehicle relay delivery γ. The information to be output includes transport information of the package set R to be transported by a delivery other than the transport vehicle relay delivery γ. Information stored in the transport vehicle relay delivery storage unit 30 may be displayed on the display device 105.

Next, the computation unit 20 deletes a pair corresponding to a pair (β, α) of regular deliveries from the set P (step S21). This is because a transport vehicle relay delivery may be generated by a combination of the regular deliveries (α, β). By executing the above-described processing, the transport vehicle relay delivery creation processing is completed.

Referring to FIG. 6 again, the computation unit 20 deletes a pair corresponding to the pair (α and β) of regular deliveries from the set P (step S3). In a case where the pair (α and β) is successfully set as a transport vehicle relay delivery, a pair including a regular delivery corresponding to the regular delivery α or a regular delivery corresponding to the regular delivery β is deleted from the set P.

Next, the computation unit 20 determines whether or not the pair is lost from the set P (step S4). For example, when the number of remaining regular deliveries is less than two in the set P, "Yes" is determined in step S4.

When "Yes" is determined in step S4, the execution of the flowchart ends. When "No" is determined in step S4, the processing is executed again from step S1. Accordingly, steps S1 to S4 are executed again for any of the pairs remaining in the set P, and it is determined whether or not it is possible to set the pair as the transport vehicle relay delivery.

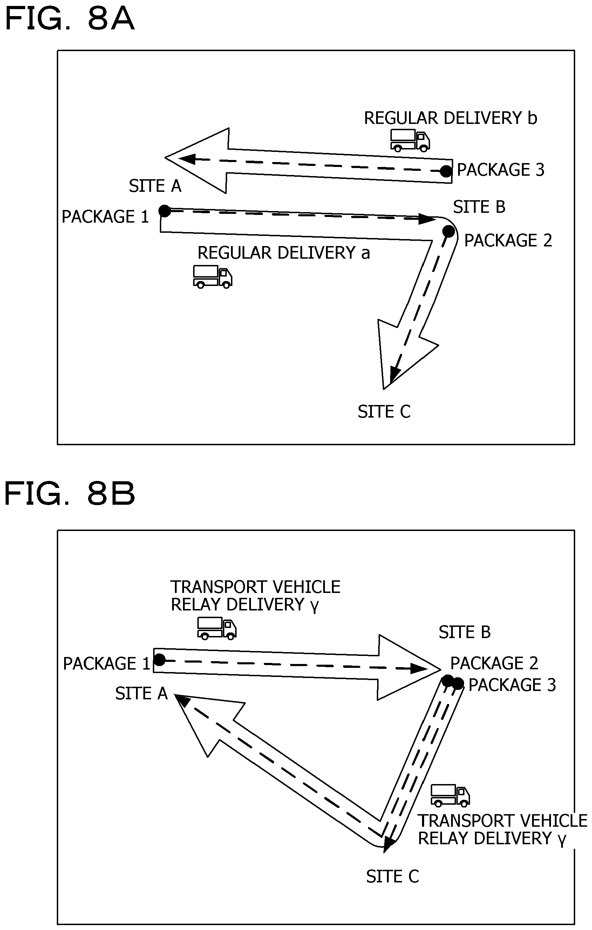

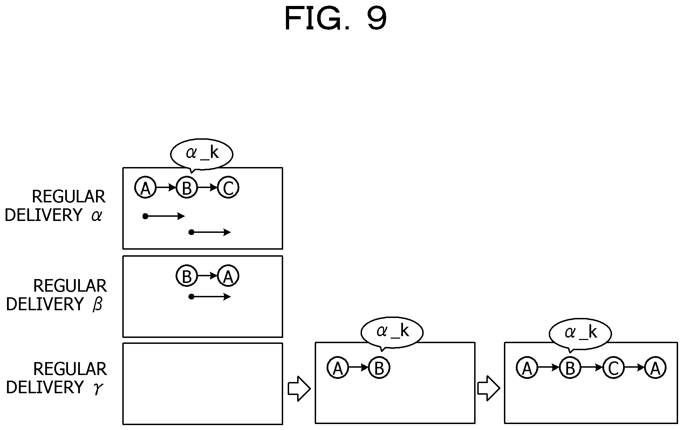

FIGs. 8A, 8B, and 9 are diagrams illustrating a case where the transport vehicle relay delivery γ is generated by using the regular delivery a described in FIG. 5 as a first half regular delivery α and the regular delivery b as a second half regular delivery β. As illustrated in FIG. 8A, the stop-by sites (α_1, α_2, ..., and α_n) of the first half regular delivery α are (site A, site B, and site C). The stop-by sites (β_1, ..., and β_n) of the second half regular delivery β are (site B and site A).

Among the stop-by sites of the first half regular delivery α, the site at which the package is loaded last other than the first stop-by site is the site B, and thus α_k is the site B. Accordingly, (site A and site B) are added to the transport vehicle relay delivery γ.

Because the site B that is α_k and the site B that is β_1 are the same, β_1 is not added to the end of the transport vehicle relay delivery γ.

The site A corresponding to (β_2, ..., and β_n) is added to the end of the transport vehicle relay delivery γ. In this case, since the site A that is α_1 and the site A that is α_n are the same, α_1 is not added after the site α_n. From the above, the stop-by sites of the transport vehicle relay delivery γ are (site A, site B, site C, and site A).

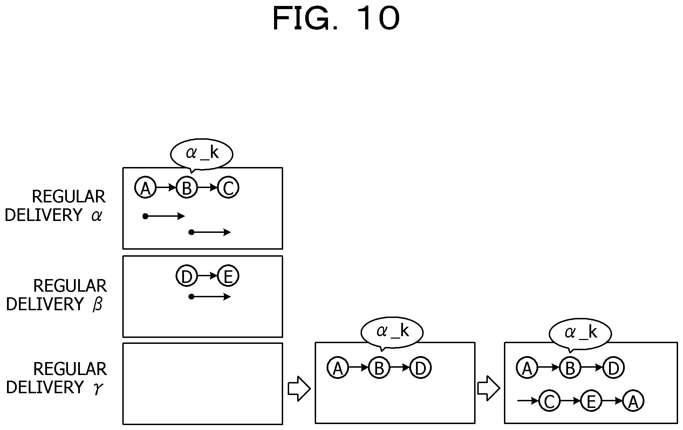

FIG. 10 is a diagram for describing a case where the first half regular delivery α is the regular delivery a described in FIG. 5, and the second half regular delivery β is a regular delivery in which a package is loaded at the site D and this package is unloaded at the site E. As illustrated in FIG. 10, the stop-by sites (α_1, α_2, ..., and α_n) of the first half regular delivery α are (site A, site B, and site C). The stop-by sites (β_1, ..., and β_n) of the second half regular delivery β are (site D and site E).

Among the stop-by sites of the first half regular delivery α, the site at which the package is loaded last other than the first stop-by site is the site B, and thus α_k is the site B. Accordingly, (site A and site B) are added to the transport vehicle relay delivery γ.

Because the site B that is α_k and the site D that is β_1 are different from each other, the site D that is β_1 is added to the end of the transport vehicle relay delivery γ.

The site C that is the remaining (α_k + 1, ..., and α_n) of the regular delivery α is added to the end of the transport vehicle relay delivery γ. After that, the site E corresponding to (β_2, ..., and β_n) is added. In this case, since the site A that is α_1 and the site C that is α_n are different from each other, the site A that is α_1 is added after the site α_n. From the above, the stop-by sites of the transport vehicle relay delivery γ are (site A, site B, site D, site C, site E, and site A).

According to the present embodiment, from a set including a plurality of regular deliveries, a combination of a first half regular delivery α and a second half regular delivery β is acquired. A site at which a package is loaded last in the regular delivery α is specified, a route of the regular delivery β is added after the specified site, and when the specified site matches a first site of the regular delivery β, the first site of the regular delivery β is deleted. In a case where a last site of the regular delivery β does not match a first site of the regular delivery α, the first site of the regular delivery α is added as the last site, and a transport vehicle relay delivery is created. By the above-described processing, a transport vehicle relay delivery is efficiently generated.

In each of the examples described above, the regular delivery α is an example of a first regular delivery, the regular delivery β is an example of a second regular delivery, and the site or the stop-by site is an example of a node.

Although the embodiment of the present disclosure has been described above in detail, the present disclosure is not limited to such particular examples and may be variously modified and changed within the scope of the gist of the present disclosure described in claims.

## Claims

1. A computation program comprising instructions which, when executed by a computer, cause the computer to execute processing comprising:
acquiring a combination of a first regular delivery and a second regular delivery from a set that includes a plurality of regular deliveries each of which has a route from a first node to a last node and for which it is determined at which node each package is loaded and transported to which node; and
creating a transport vehicle relay delivery by specifying a node at which a package is loaded last in the first regular delivery, adding a route of the second regular delivery after the specified node, deleting a first node of the second regular delivery when the specified node and the first node of the second regular delivery match, and adding a first node of the first regular delivery as a last node when a last node of the second regular delivery does not match the first node of the first regular delivery.

2. The computation program according to claim 1, the processing further comprising:
determining whether or not a condition of the transport vehicle relay delivery is satisfied for the regular deliveries included in the set, and excluding a regular delivery that does not satisfy the condition of the transport vehicle relay delivery from both the first regular delivery and the second regular delivery.

3. The computation program according to claim 1, the processing further comprising:
determining whether or not a condition of the transport vehicle relay delivery is satisfied for the packages to be transported by the first regular delivery and the second regular delivery, and for a package that does not satisfy the condition of the transport vehicle relay delivery, searching for a regular delivery that is capable of transporting the package other than the first regular delivery and the second regular delivery.

4. The computation program according to claim 1, the processing further comprising:
repeating processing of deleting the first regular delivery and the second regular delivery from the set, acquiring two regular deliveries from remaining regular deliveries, and creating a new transport vehicle relay delivery until a number of remaining regular deliveries is less than two.

5. A computation method implemented by a computer to execute processing comprising:
acquiring a combination of a first regular delivery and a second regular delivery from a set that includes a plurality of regular deliveries each of which has a route from a first node to a last node and for which it is determined at which node each package is loaded and transported to which node; and
creating a transport vehicle relay delivery by specifying a node at which a package is loaded last in the first regular delivery, adding a route of the second regular delivery after the specified node, deleting a first node of the second regular delivery when the specified node and the first node of the second regular delivery match, and adding a first node of the first regular delivery as a last node when a last node of the second regular delivery does not match the first node of the first regular delivery.

6. An information processing apparatus comprising a computation unit configured to perform processing comprising:
acquiring a combination of a first regular delivery and a second regular delivery from a set that includes a plurality of regular deliveries each of which has a route from a first node to a last node and for which it is determined at which node each package is loaded and transported to which node; and
creating a transport vehicle relay delivery by specifying a node at which a package is loaded last in the first regular delivery, adding a route of the second regular delivery after the specified node, deleting a first node of the second regular delivery when the specified node and the first node of the second regular delivery match, and adding a first node of the first regular delivery as a last node when a last node of the second regular delivery does not match the first node of the first regular delivery.

## Amended claims

### Amended claims in accordance with Rule 137(2) EPC.

1. A computation program comprising instructions which, when executed by a computer, cause the computer to execute processing comprising:
acquiring a combination of a first regular delivery and a second regular delivery from a set that includes a plurality of regular deliveries each of which has a route from a first node to a last node and for which it is determined at which node each package is loaded and transported to which node; and
creating a transport vehicle relay delivery by specifying a node at which a package is loaded last in the first regular delivery, adding a route of the second regular delivery after the specified node, deleting a first node of the second regular delivery when the specified node and the first node of the second regular delivery match, and adding a first node of the first regular delivery as a last node when a last node of the second regular delivery does not match the first node of the first regular delivery,
wherein the transport vehicle relay delivery includes changing from a first transport vehicle for the first regular delivery to a second transport vehicle for the second regular delivery.

2. The computation program according to claim 1, the processing further comprising:
determining whether or not a condition of the transport vehicle relay delivery is satisfied for the regular deliveries included in the set, and excluding a regular delivery that does not satisfy the condition of the transport vehicle relay delivery from both the first regular delivery and the second regular delivery.

3. The computation program according to claim 1, the processing further comprising:
determining whether or not a condition of the transport vehicle relay delivery is satisfied for the packages to be transported by the first regular delivery and the second regular delivery, and for a package that does not satisfy the condition of the transport vehicle relay delivery, searching for a regular delivery that is capable of transporting the package other than the first regular delivery and the second regular delivery.

4. The computation program according to claim 1, the processing further comprising:
repeating processing of deleting the first regular delivery and the second regular delivery from the set, acquiring two regular deliveries from remaining regular deliveries, and creating a new transport vehicle relay delivery until a number of remaining regular deliveries is less than two.

5. A computation method implemented by a computer to execute processing comprising:
acquiring a combination of a first regular delivery and a second regular delivery from a set that includes a plurality of regular deliveries each of which has a route from a first node to a last node and for which it is determined at which node each package is loaded and transported to which node; and
creating a transport vehicle relay delivery by specifying a node at which a package is loaded last in the first regular delivery, adding a route of the second regular delivery after the specified node, deleting a first node of the second regular delivery when the specified node and the first node of the second regular delivery match, and adding a first node of the first regular delivery as a last node when a last node of the second regular delivery does not match the first node of the first regular delivery,
wherein the transport vehicle relay delivery includes changing from a first transport vehicle for the first regular delivery to a second transport vehicle for the second regular delivery.

6. An information processing apparatus comprising a computation unit configured to perform processing comprising:
acquiring a combination of a first regular delivery and a second regular delivery from a set that includes a plurality of regular deliveries each of which has a route from a first node to a last node and for which it is determined at which node each package is loaded and transported to which node; and
creating a transport vehicle relay delivery by specifying a node at which a package is loaded last in the first regular delivery, adding a route of the second regular delivery after the specified node, deleting a first node of the second regular delivery when the specified node and the first node of the second regular delivery match, and adding a first node of the first regular delivery as a last node when a last node of the second regular delivery does not match the first node of the first regular delivery,
wherein the transport vehicle relay delivery includes changing from a first transport vehicle for the first regular delivery to a second transport vehicle for the second regular delivery.
